# EUROPEAN PATENT APPLICATION

(11) **EP 3 936 390 A1**
(43) Date of publication of application: **12.01.2022**
(21) Application number: 19833309.8
(22) Date of filing: 04.07.2019
(51) Int. Cl.: B60R 19/24, B60R 19/02

(54) **VEHICULAR REAR BUMPER INSTALLATION SUPPORT AND VEHICLE**

(30) Priority: 09.07.2018 CN 201810746216
(71) Applicant: PSA Automobiles SA, 78300 Poissy (FR)
(72) Inventor: WANG, Liting, Shanghai 200233 (CN); XU, Chunliang, Shanghai 200233 (CN); WANG, Hongri, Shanghai 200233 (CN); YIN, Junlong, Shanghai 200233 (CN); JIANG, Huanjun, Shanghai 200233 (CN)
(86) International application number: PCT/CN2019/094674
(87) International publication number: WO 2020/011093

(57) **Abstract**

Disclosed is a vehicular rear bumper installation support, comprising a first bracket (100) fixed on a vehicle body and a second bracket (200) fixed on a rear bumper assembly, wherein the rear bumper assembly comprises a rear bumper trim strip, and the rear bumper assembly is mounted on the vehicle body through a buckle connection of the first bracket and the second bracket in the length direction of the vehicle body.

## Description

### CROSS-REFERENCE TO RELATED APPLICATION

The present application claims priority to Chinese Application No. 2018107462160 filed on July 09, 2018, entitled "Vehicular Rear Bumper Installation Support and Vehicle".

### FIELD OF TECHNOLOGY

The present application relates to the technical field of vehicle parts, and in particular, to a vehicular rear bumper installation support and a vehicle.

### BACKGROUND

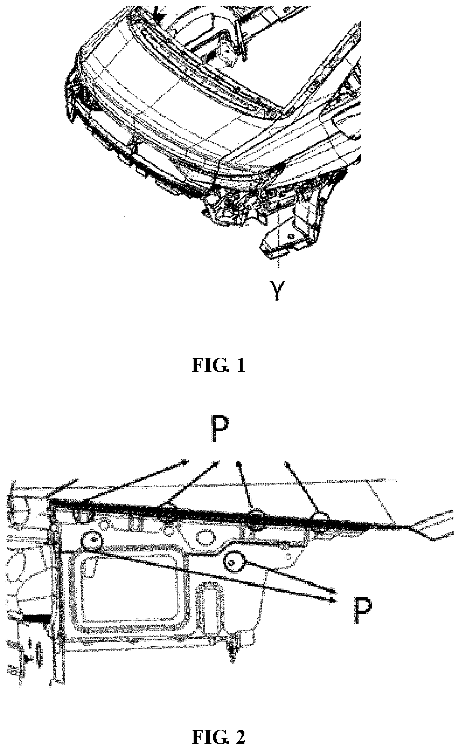

Generally, when a rear bumper assembly is installed, the rear bumper assembly is forcibly installed on the vehicle body by knocking the rear bumper assembly in the direction of the longitudinal axis, as shown in the Y direction in FIG 1, of the vehicle body at the side region take advantage of the toughness of the rear bumper. However, if it is necessary to install a rear bumper trim strip near a parting line between the side position of the vehicle body and the rear bumper, a procedure to install the rear bumper trim strip is needed after the installation of the rear bumper assembly is completed so as to install the rear bumper trim strip on the vehicle body, which will prolong the installation cycle by the operator and increase the manufacturing cost. If the trim strip and the rear bumper assembly are assembled into a new rear bumper assembly before the rear bumper assembly is installed, the toughness of the newly assembled rear bumper assembly will be reduced due to the material of the trim strip. If the traditional installation method is continued to install the rear bumper assembly forcibly on the vehicle body by knocking the rear bumper assembly on the side of the vehicle body, it will cause potential cracks in the rear bumper assembly and may damage the trim strip.

### SUMMARY

### (1) Technical problems to be solved

The object of this application is to provide a vehicular rear bumper installation support for installing a rear bumper assembly including a rear bumper trim on the vehicle body by a buckle connection through a one-step process, so as to solve the problems that it is necessary to additionally add one procedure to install the rear bumper trim after the rear bumper is installed, which increases the manufacturing cost and prolongs production cycle in the prior art.

### Technical solutions

In order to solve the technical problems above, on the one hand, the present application provides a vehicular rear bumper installation support including a first bracket fixed on a vehicle body and a second bracket fixed on a rear bumper assembly, wherein the rear bumper assembly includes a rear bumper trim strip, and the rear bumper assembly is mounted on the vehicle body through a buckle connection of the first bracket and the second bracket in the length direction of the vehicle body.

According to an alternative of the solution above, the first bracket includes a first bracket body and a plurality of first bracket buckle connection structures disposed on the first bracket body, and the second bracket includes a second bracket body and a plurality of second bracket buckle connection structures disposed on the second bracket body corresponding to the number of the first bracket buckle connection structures, wherein, the rear bumper assembly is mounted on the vehicle body through a cooperative buckle connection between each of the plurality of first bracket buckle connection structures and each of the plurality of second bracket buckle connection structures.

According to an alternative of the solutions above, at least one of the plurality of first bracket buckle connection structures includes a first hollow portion disposed on the first bracket body and a buckle portion protruding from at least a portion of an edge of the first hollow portion to the second bracket; at least one of the plurality of second bracket buckle connection structures includes a second hollow portion disposed on the second bracket body and a slot portion protruding from at least a portion of an edge of the second hollow portion to the first bracket.

According to an alternative of the solutions above, the buckle portion includes a first blocking plate and a second blocking plate that are connected to each other at an angle, wherein the first blocking plate and the second blocking plate are respectively connected to opposite ends of the first hollow portion in the length direction of the vehicle body, wherein the first blocking plate is configured to restrict the second bracket in the length direction of the vehicle body and to support the second bracket in the height direction of the vehicle body, and the second blocking plate is configured to restrict the second bracket in the width direction of the vehicle body.

According to an alternative of the solutions above, an end of the first blocking plate connected with the second blocking plate is a curved structure, and the first blocking plate is connected to the second blocking plate through the curved structure.

According to an alternative of the solutions above, in the height direction of the vehicle body, the first blocking plate has a smaller width than the second blocking plate.

According to an alternative of the solutions above, the second blocking plate is provided with a plurality of reinforcing beams parallel to an edge of the second blocking plate on a side connected to the second bracket.

According to an alternative of the solutions above, the slot portion includes a plurality of slot plates protruding from at least a portion of an edge of the second hollow portion to the first bracket and a slot provided on one of the plurality of slot plates; the slot portion has an opening in the direction toward the front of the vehicle body so as to slid into the buckle portion toward the front of the vehicle body.

According to an alternative of the solutions above, the one of the plurality of slot plates is provided with two opposite guide blocks protruding toward the slot, wherein the guide block is configured to guide the slot to slide into the buckle portion during the slot portion being buckled into the buckle portion, and the guide block is configured to block the slot from sliding out of the buckle portion after the slot portion is buckled into the buckle portion.

On the other hand, the present application provides a vehicle having a vehicular rear bumper installation support according to any of the solutions above.

### Beneficial effects

The technical solutions above of the present application has the following advantages.

The vehicular rear bumper installation support according to the present application includes a first bracket fixed on a vehicle body and a second bracket fixed on a rear bumper assembly, wherein the rear bumper assembly includes a rear bumper trim strip, and the rear bumper assembly is mounted on the vehicle body through a buckle connection of the first bracket and the second bracket in the length direction of the vehicle body. As a result, the rear bumper trim is assembled on the rear bumper assembly, and the rear bumper assembly equipped with the rear bumper trim may be installed on the vehicle body by the rear bumper mounting supports that may be cooperatively buckle-connected, installed on the rear bumper assembly and the vehicle body respectively, through a single procedure, i.e., a one-step installation process during the vehicle assembly process. Compared with the two-step installation processes of first installing the rear bumper on the vehicle body and then installing the rear bumper trim on the vehicle body in the prior art, the one-step installation process according to the present application may not only shorten the installation cycle, but also reduce the manufacturing cost, and has better economic efficiency. In addition, compared with the installation method of installing the rear bumper on the vehicle body forcibly by knocking the rear bumper assembly laterally in the prior art, this buckle connection method may decrease the potential cracks generated during the installation process of the rear bumper and reduce the risk of damage during the installation process, thereby improving the quality of the rear bumper.

### BRIEF DESCRIPTION OF THE DRAWINGS

FIG 1 is a schematic diagram of the installation direction of a rear bumper assembly according to the prior art;
FIG. 2 is a schematic diagram of a vehicle body structure for installing a first bracket according to the present application;
FIG. 3 is a structure diagram of a first bracket installed on the vehicle body according to the present application;
FIG. 4 is a structure diagram of a second bracket installed on the rear bumper assembly according to the present application;
FIG. 5 is a schematic diagram of the installation direction of a rear bumper assembly according to the present application;
FIGS. 6A to 6D are structure diagrams of the buckle connection between the first bracket and the second bracket;
FIGS. 7A to 7E are structure diagrams of the first bracket;
FIG. 8 is a schematic diagram of the second bracket 200;
FIGS. 9A to 9E are structure diagrams of the buckle connection between the buckle portion 122 of the first bracket 100 and the slot portion 222 of the second bracket 200;

Reference Numerals: 100 first bracket; 110 first bracket body; 120 first bracket buckle connection structure; 121 first hollow portion; 122 buckle portion; 122-10 first blocking plate; 122-11 curved structure; 122-20 second blocking plate; 122-21 first part; 122-22 second part; 122-23 third part; 122-30 reinforcing beam; 200 second bracket; 210 second bracket body; 220 second bracket buckle connection structure; 221 second hollow portion; 222 slot portion; 222-10 slot plate; 222-11 first plate; 222-12 second plate; 222-13 third plate; 222-14 fourth plate; 222-20 slot; 222-30 guide block; 121-1, 221-1 first side; 121-2, 221-2 second side; 121-3, 221-3 third side; 121-4, 221-4 fourth side; P: fastening point.

### DETAILED DESCRIPTION

In order to make the object, technical solutions and advantages of the embodiments of the present disclosure more clear, the technical solutions in the embodiments of the present disclosure are clearly and completely described below in conjunction with the accompanying drawings in the embodiments of the present disclosure. Obviously, these embodiments described are a part of the embodiments of the present disclosure, rather than all of the embodiments. All other embodiments obtained by a person of ordinary skill in the art based on the embodiments of the present disclosure without any creative work belong to the protection scope of the present disclosure.

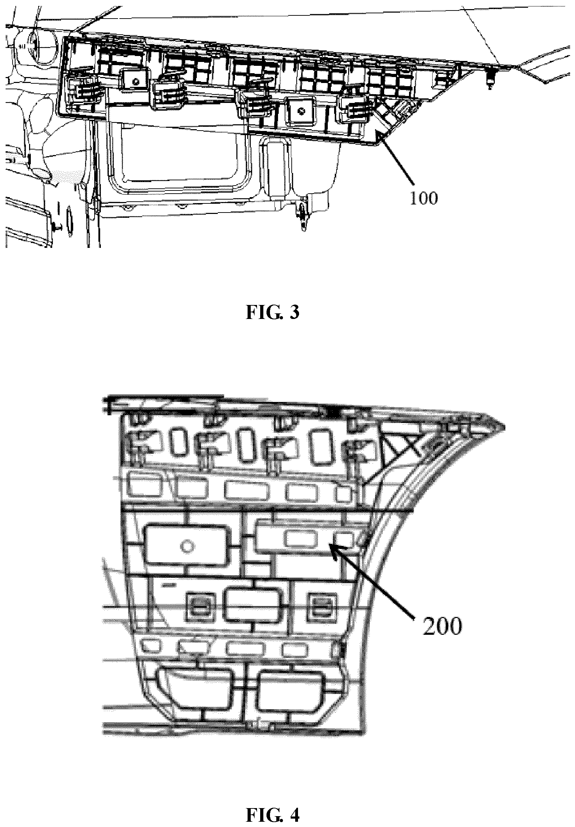

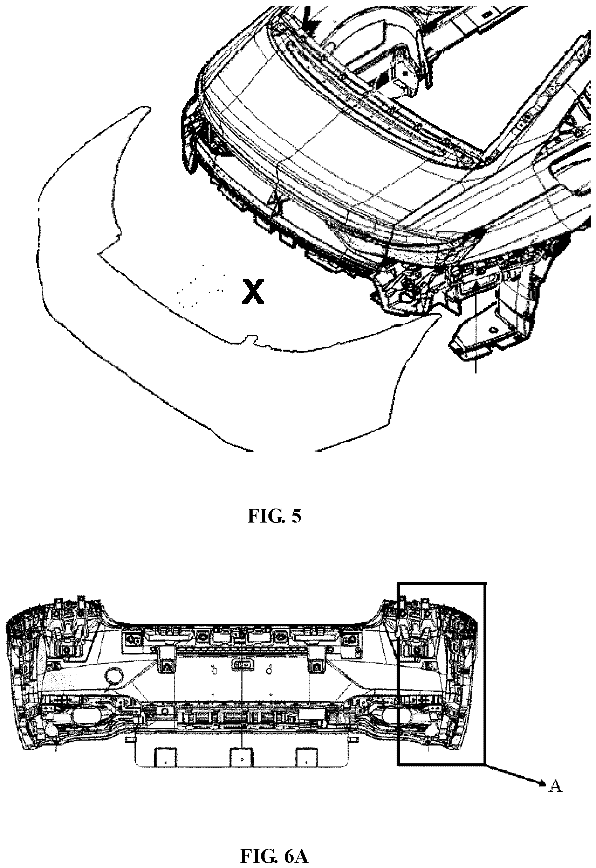

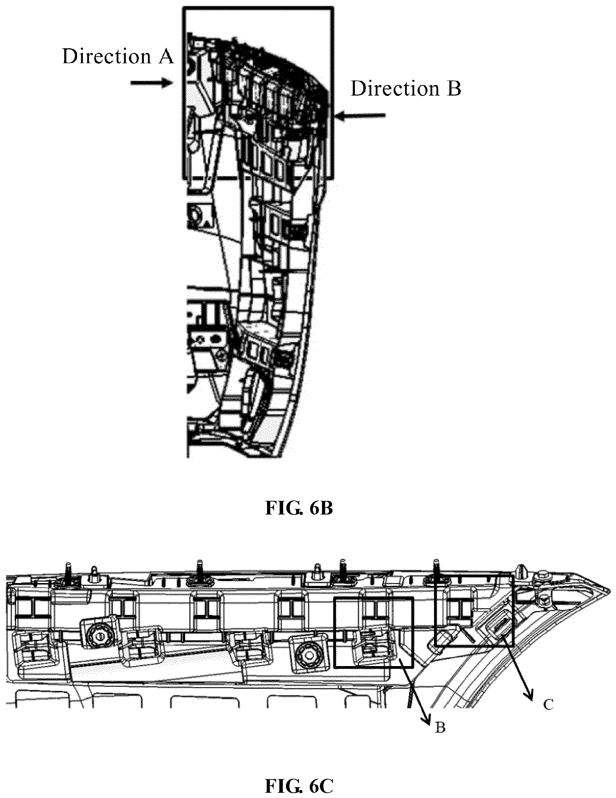

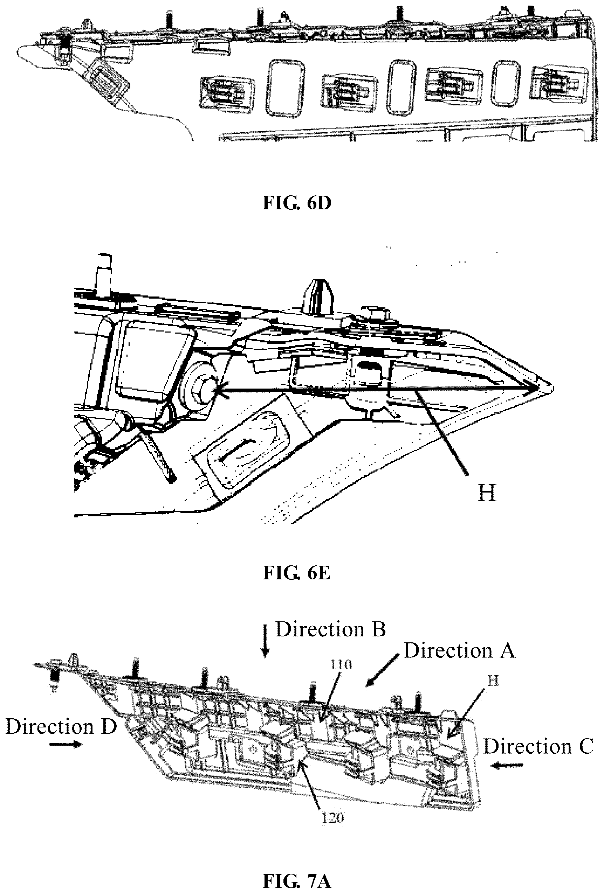

The present application provides a vehicular rear bumper installation support including a first bracket 100 fixed on a vehicle body and a second bracket 200 fixed on a rear bumper assembly, wherein the rear bumper assembly is mounted on the vehicle body through a buckle connection between the first bracket 100 and the second bracket 200 in the length direction of the vehicle body. The first bracket 100 is installed on the vehicle body by a plurality of fastening points P as shown in FIG. 2, and the installed structure is shown in FIG. 3. The second bracket 200 is fixed on a rear bumper assembly by welding as shown in FIG. 4. A rear bumper trim may be installed on the rear bumper assembly. The rear bumper assembly is installed on the vehicle body through the buckle connection of the first bracket 100 and the second bracket 200 in the length direction of the vehicle body, which is in the X direction as shown in FIG. 5. The structure formed by buckle-connecting the first bracket 100 and the second bracket 200 is shown in FIG. 6A. The vehicular rear bumper installation support according to the present application is installed symmetrically on the left and right sides of the vehicle body, so as to fix the rear bumper assembly at the left and right sides of the vehicle body at the same time. For convenience, one side is taken as an example for description in this application. FIG. 6B shows an enlarged view of area A in FIG. 6A. FIG. 6C and FIG. 6D are views along the directions A and B in FIG. 6B, respectively. FIG. 6E shows an enlarged view of area C in FIG. 6C. As can be seen from FIG. 6A to FIG. 6D, the rear bumper assembly equipped with the rear bumper trim may be installed on the vehicle body by the buckle connection of the first bracket 100 and the second bracket 200 in the X direction, that is, the length direction of the vehicle body, thereby decreasing the installation steps of separately installing the rear bumper and the rear bumper trim, shortening the assembly cycle as well as reducing the production cost. As can be seen from FIG. 6E, when the rear bumper is installed on the vehicle body through the vehicular rear bumper installation support according to this application, the distance between the reserved tightening point in the X direction and the rear fender may be shortened to about 130 mm, and the installation tolerance between the rear bumper and the side wall of the vehicle body may be +/-1.

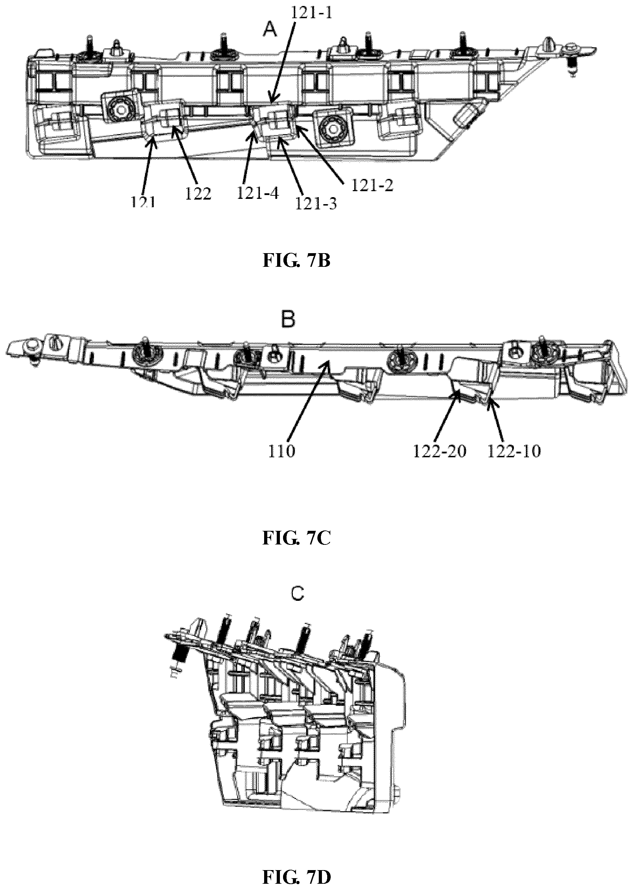

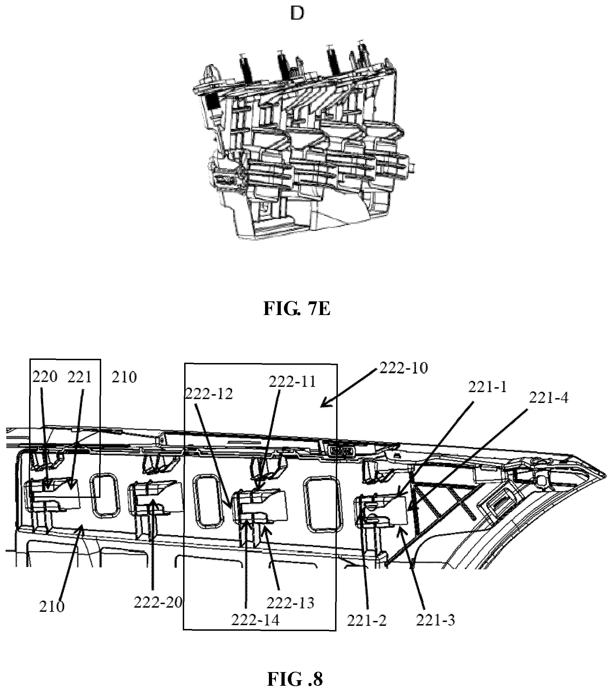

FIG. 7A is structure diagram of the first bracket 100, FIG. 7B is a view along the direction A of FIG. 7A, FIG. 7C is a view along the direction B of FIG. 7A, FIG. 7D is a view along the direction C of FIG. 7A, and FIG. 7E is a view along the direction D of FIG. 7A.

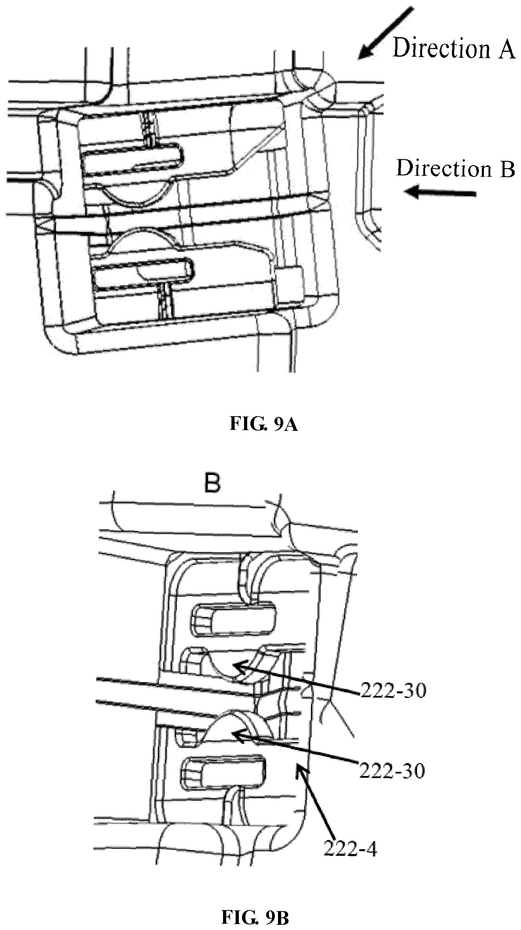

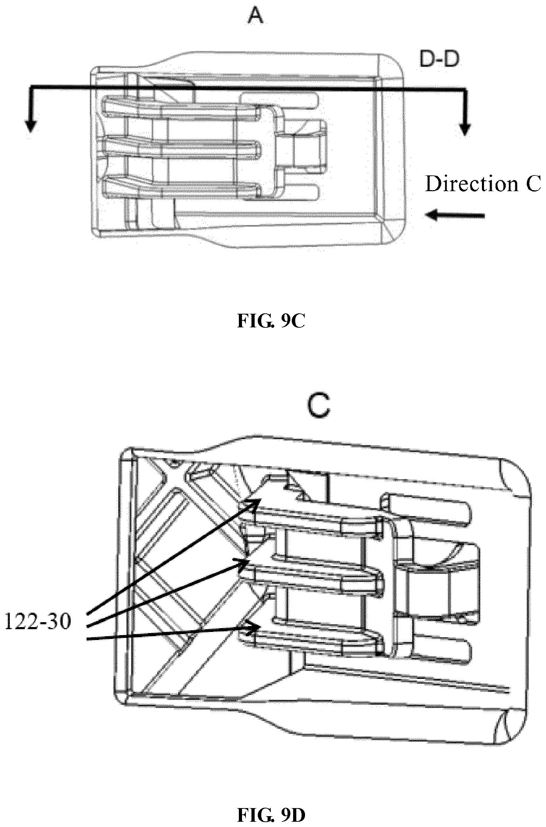

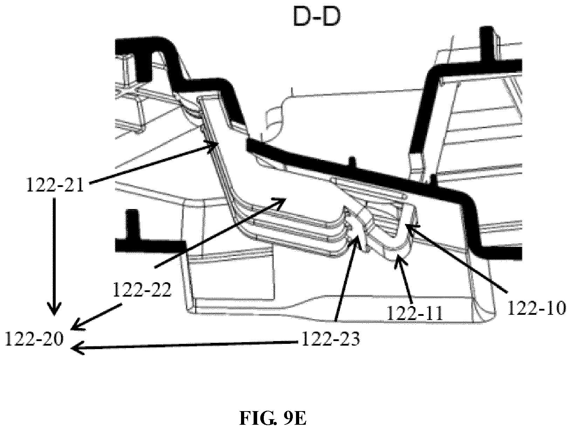

FIG. 9A is a structure diagram of the buckle connection between the buckle portion 122 of the first bracket 100 and the slot portion 222 of the second bracket 200 that is, an enlarged view of area B in FIG. 6C, FIG. 9B is a view along the direction B of FIG. 9A, 9C is a view along the direction A of FIG. 9A, FIG. 9D is a view along the direction C of FIG. 9C, and FIG. 9E is a view along the D-D of FIG. 9C.

The structure of the first bracket 100 is shown in FIGS. 7A to 7E and FIGS. 9A to 9E. The first bracket 100 includes a first bracket body 110 and a plurality of first bracket buckle connection structures 120 disposed on the first bracket body 110. At least one of the first bracket buckle connection structures 120 includes a first hollow portion 121 disposed on the first bracket body 110 and a buckle portion 122 protruding from at least a portion of an edge of the first hollow portion 121 to a side of the first bracket body 110 connected with the second bracket 200. The buckle portion 122 protruding from the side of the first bracket body 110 connected with the second bracket 200 may be configured to hang the second bracket 200 to form a buckle connection.

According to the embodiments of the present application, the first hollow portion 121 may have a shape of a quadrilateral including a square, a rectangle, a trapezoid, etc., or may have a shape of a triangle and a circle, and may be adjusted according to the needs of the designer and the space in which the rear bumper is installed, namely, the first hollow portion 121 is a gap with a closed edge formed on the first bracket body 110. According to an embodiment of the present application, the first hollow portion 121 is rectangular and includes a first side 121-1, a second side 121-2, a third side 121-3, and a fourth side 121-4, wherein the first side 121-1 and the third side 121-3 are located on opposite sides in the height direction of the vehicle body, and the second side 121-2 and the fourth side 121-4 are located on opposite sides in the length direction of the vehicle body.

According to the embodiments of the present application, in order to ensure that the rear bumper assembly is installed in the longitudinal direction of the vehicle body, in other words, to ensure that the first bracket 100 and the second bracket 200 are buckle-connected in the longitudinal direction of the vehicle body, the buckle portion 122 protruding from the first bracket body 110 needs to provide a blocking force against the second bracket 200 in the longitudinal direction of the vehicle body so as to prevent the second bracket 200 from sliding out of the buckle portion 122 of the first bracket 100. According to an embodiment of the present application, the buckle portion 122 includes a first blocking plate 122-10 and a second blocking plate 122-20 that are connected to each other at an angle. The first blocking plate 122-10 and the second blocking plate 122-20 are respectively connected to opposite sides of the first hollow portion 121 in the longitudinal direction of the vehicle body. In other words, the first blocking plate 122-10 and the second blocking plate 122-20 are respectively connected to the second side 121-2 and the fourth side 121-4 of the first hollow portion 121. According to the embodiments of the present application, the angle between the first blocking plate 122-10 and the second blocking plate 122-20 may be adjusted according to actual needs, but it is necessary to ensure that the first blocking plate 122-10 is configured to restrict the second bracket 200 in the length direction of the vehicle body and support the second bracket 200 in the height direction of the vehicle body, and the second blocking plate 122-20 is configured to restrict the second bracket 200 in the width direction of the vehicle body.

According to the embodiments of the present application, an end of the first blocking plate 122-10 connected with the second blocking plate 122-20 is a curved structure 122-11, and the first blocking plate 122-10 is connected to the second blocking plate 122-20 through the curved structure 122-11. Through the curved structure 122-11, the first blocking plate 122-10 and the second blocking plate 122-20 may be smoothly connected, so as to ensure the connecting portion between the first blocking plate 122-10 the second blocking plate 122-20, that is, the curved structure 122-11 and the first blocking plate 122-10 are integrally formed, i.e., as a whole. When a force is applied in the length direction of the vehicle body, the connecting portion between the first blocking plate 122-10 the second blocking plate 122-20 may have better strength, thereby ensuring that the first bracket 100 has a good support and buckle restraint for the second bracket 200 in the length direction of the vehicle body.

According to an embodiment of the present application, the second blocking plate 122-20 includes a first part 122-21, a second part 122-22, and a third part 122-23 that are connected at angles in sequence, wherein the first part 122-21 is connected to the edge of the first hollow portion 121, the third part 122-23 are connected to the first blocking plate 122-10, and the second part 122-22 is connected between the first part 122-21 and the third part 122-23, wherein the first part 122-21 and the third part 122-23 are respectively located on both sides of the second part 122-22.

According to an embodiment of the present application, a plurality of reinforcing beams 122-30 parallel to edges of the first part 122-21 and the second part 122-22 are disposed at the sides of the first part 122-21 and the second part 122-22 connected to the second bracket 200. The reinforcing beams 122-30 protrude outward from the first part 122-21 and the second part 122-22, and the plurality of reinforcing beams 122-30 are parallel to each other to further strengthen the strength of the second blocking plate 122-20.

According to an embodiment of the present application, the first blocking plate 122-10 has a width smaller than that of the second blocking plate 122-20, that is, the first part 122-21, the second part 122-22, and the third part 122-23 have a larger width than the first blocking plate 122-10, which may ensure that after the second bracket 200 slides into the first bracket 100, the second blocking plate 122-20 may restrict the second bracket 200 in the width direction of the vehicle body.

According to an embodiment of the present application, as shown in FIGS. 8 and FIGS. 9A to 9E, the second bracket 200 includes a second bracket body 210 and a plurality of second bracket buckle connection structures 220 disposed on the second bracket body 210 corresponding to the number of the plurality of first bracket buckle connection structures 120. Each of the plurality of first bracket buckle connection structures 120 and each of the plurality of first bracket buckle connection structures 220 cooperate to form a buckle connection, so as to install the rear bumper assembly on the vehicle body.

At least one of the plurality of second bracket buckle connection structures 220 includes a second hollow portion 221 disposed on the second bracket body 210 and a slot portion 222 protruding from at least a portion of an edge of the second hollow portion 221 to a side of the second bracket body 210 connected with the first bracket 100. The slot portion 222 protruding from the second bracket body 210 may form a buckle connection with the buckle portion 122 of the first bracket 100, so as to install the rear bumper assembly on the vehicle body.

According to the embodiments of the present application, the second hollow portion 221 may have a shape of a quadrilateral including a square, a rectangle, a trapezoid, etc., or may have a shape of a triangle and a circle, and may be adjusted according to the needs of the designer and the space in which the rear bumper is installed, namely, the second hollow portion 221 is a gap with a closed edge formed on the second bracket body 210. According to an embodiment of the present application, the second hollow portion 221 is rectangular and includes a first side 221-1, a second side 221-2, a third side 221-3, and a fourth side 221-4, wherein the first side 221-1 and the third side 221-3 are located on opposite sides in the height direction of the vehicle body, and the second side 221-2 and the fourth side 221-4 are located on opposite sides in the length direction of the vehicle body.

According to the embodiments of the present application, the slot portion 222 includes slot plates 222-10 protruding from at least a portion of an edge of the second hollow portion 221 to the side of the second bracket body 210 connected to the first bracket 100 and a slot 222-20 provided on the slot plates 222-10. In order to enable the second bracket 200 to slide into the first bracket 100 in the length direction of the vehicle body, the slot plates 222-10 and the slot 222-20 are provided with an opening toward the front of the vehicle body, through which the slot 222-20 may slid into the buckle portion 122 on the first bracket 100, that is, may be buckled on the first blocking plate 122-10, and be restricted between the second blocking plate 122-11 and the first hollow portion 121 and make the buckle portion 122 be restricted between the slot plates 222-10 and the second hollow portion 221. In this way, the first blocking plate 122-10 supports the slot plates 222-10 of the second bracket 200 in the height direction of the vehicle body, and the second blocking plate 122-20 restricts the slot plates 222-10 of the second bracket 200 in the width direction of the vehicle body so as to prevent the slot plates 222-10 from sliding out of the buckle portion 122.

According to the embodiments of the present application, the slot plates 222-10 include at least a first plate 222-11, a second plate 222-12, a third plate 222-13, and a fourth plate 222-14, wherein the first plate 222-11 and the third plate 222-13 are connected to the first side 221-1 and the third side 221-3 of the second hollow portion 221; the second plate 222-12 is connected to the second side 221-2 of the second hollow portion 221; and the fourth plate 222-14 is connected to the first plate 222-11, the second plate 222-12 and the third plate 222-13 to form a protruding structure protruding from the second hollow portion 221 to the side of the second bracket body 210 connected to the first bracket 100. Since no slot plate 222-10 is connected to the fourth side 221-4 of the second hollow portion 221, an opening is formed on the slot plate 222-10 toward the fourth side 221-4. According to an embodiment of the present application, the fourth plate 222-14 is provided with a slot 222-20, the opening direction of the slot 222-20 is consistent with the opening direction of the slot plate 222-10, that is, toward the fourth side 221-4 of the second hollow portion 221. As such, the slot 222-20 slides into the first blocking plate 122-10 of the first bracket 100 from the opening, that is, in the direction toward the second side 221-2 from the fourth side 221-4 of the second hollow portion 221 and is hung on the first blocking plate 122-10.

According to the embodiments of the present application, the slot plate 222-10 is provided with two opposite guide blocks 222-30 protruding toward the slot 222-20. In other words, the plates on the upper and lower sides of the slot plate 222-10, i.e., the first plate 222-11 and the third plate 222-13 are provided with two opposite guide blocks 222-30 protruding to the slot 222-20. Due to the arrangement of the guide blocks 222-30, the width of the slot 222-20 is reduced here, so that after the slot is buckled into the buckle portion 122, the guide blocks 222-30 may be restricted by the first blocking plate 122-10 in the length direction of the vehicle body and be restricted by the second blocking plate 122-20 in the width direction of the vehicle body. In addition, according to the embodiments of the present application, the guide block 222-30 has an arc shape. Using the arc of the guide block 222-30, the guide blocks 222-30 may conveniently slide over the first blocking plate 122-10 when the slot 222-20 slides toward the buckle portion 122. After the guide blocks 222-30 slide over the first blocking plate 122-10, that is, the slot 222-20 is buckled into the buckle portion 122, the protrusion of the guide block 222-30 may block the guide block from sliding out of the first blocking block 122-10 in the opposite direction, thereby ensuring that the second bracket 200 cannot slide out of the first bracket 100 in the length direction of the vehicle body. In addition, due to the protrusion of the guide block 222-30 makes the lower edge of the guide block 222-30 lower than the upper edge of the second blocking plate 122-20, so that the guiding block 222-30 may not slide out from the upper edge of the second blocking plate 122-20, thereby ensuring that the second bracket 200 cannot slide out of the first bracket 100 in the width direction of the vehicle body. In addition, the shape of the guide block 222-30 may be changed according to the actual situation as long as the side of the guide block 222-30 that slides toward the first blocking plate 122-10 is provided with a structure that facilitates sliding over the upper edge of the first blocking plate 122-10 and may prevent the guide block 222-30 sliding out in the reverse direction from the upper edge of the first blocking plate 122-10 after it slides over the upper edge of the first blocking plate 122-10.

The first bracket body 110 is provided with a first support structure protruding to the side of the first bracket body 110 connected to the second bracket 200 above the first bracket body buckle connection structure 120. In other words, the first support structure extends outward from the side of the first bracket body 110 connected to the second support 200 perpendicularly to the first bracket body 110. The second bracket body 210 is provided with a second support structure protruding to the side of the second bracket body 120 connected to the first support 100 above the second bracket body buckle connection structure 220. In other words, the second support structure extends outward from the side of the second bracket body 210 connected to the first bracket 100 perpendicularly to the second bracket body 210. When the second bracket 200 is buckle-connected to the first bracket 100, the second support structure contacts the upper surface of the first support structure, and thus is supported by the first support structure in the height direction of the vehicle body. According to an embodiment of the present application, the first support structure and the second support structure are plate-shaped structures.

According to actual needs, the first bracket may be installed on the rear bumper assembly, and the second bracket may be installed on the vehicle body.

According to an embodiment of the present application, the various component parts of the buckle portion 122 may be integrally formed, and the various component parts of the slot portion 222 may be integrally formed. Moreover, the buckle portion 122 and the first bracket body 110 may be integrally formed, and the buckle portion 222 and the second bracket body 210 may be integrally formed.

The present application also provides a vehicle including the above-mentioned rear bumper mounting support.

In summary, the vehicular rear bumper installation support according to the present application includes a first bracket fixed on a vehicle body and a second bracket fixed on a rear bumper assembly, wherein the rear bumper assembly includes a rear bumper trim strip, and the rear bumper assembly is mounted on the vehicle body through a buckle connection of the first bracket and the second bracket in the length direction of the vehicle body. As a result, the rear bumper trim is assembled on the rear bumper assembly, and the rear bumper assembly equipped with the rear bumper trim may be installed on the vehicle body by the rear bumper mounting supports that may be cooperatively buckle-connected, installed on the rear bumper assembly and the vehicle body respectively, through a single procedure, i.e., a one-step installation process during the vehicle assembly process. Compared with the two-step installation processes of first installing the rear bumper on the vehicle body and then installing the rear bumper trim on the vehicle body in the prior art, the one-step installation process according to the present application may not only shorten the installation cycle, but also reduce the manufacturing cost, and has better economic efficiency. In addition, compared with the installation method of installing the rear bumper on the vehicle body forcibly by knocking the rear bumper assembly laterally in the prior art, this buckle connection method may decrease the potential cracks generated during the installation process of the rear bumper and reduce the risk of damage during the installation process, thereby improving the quality of the rear bumper.

Finally, it should be noted that the above embodiments are only used to explain the technical solutions of the present disclosure, and are not limited thereto; although the present disclosure is described in detail with reference to the foregoing embodiments, it should be understood by those skilled in the art that they can still modify the technical solutions described in the foregoing embodiments and make equivalent replacements to a part of the technical features, and these modifications and substitutions do not depart from the spirit and scope of the technical solutions of the embodiments of the present disclosure.

## Claims

1. A vehicular rear bumper installation support, **characterized by** comprising a first bracket fixed on a vehicle body and a second bracket fixed on a rear bumper assembly, wherein the rear bumper assembly comprises a rear bumper trim strip, and the rear bumper assembly is mounted on the vehicle body through a buckle connection of the first bracket and the second bracket in the length direction of the vehicle body.

2. The vehicular rear bumper installation support of claim 1, **characterized in that**, the first bracket comprises a first bracket body and a plurality of first bracket buckle connection structures disposed on the first bracket body, and the second bracket comprises a second bracket body and a plurality of second bracket buckle connection structures disposed on the second bracket body corresponding to the number of the first bracket buckle connection structures, wherein, the rear bumper assembly is mounted on the vehicle body through a cooperative buckle connection between each of the plurality of first bracket buckle connection structures and each of the plurality of second bracket buckle connection structures.

3. The vehicular rear bumper installation support of claim 2, **characterized in that**, at least one of the plurality of first bracket buckle connection structures includes a first hollow portion disposed on the first bracket body and a buckle portion protruding from at least a portion of an edge of the first hollow portion to the second bracket; at least one of the plurality of second bracket buckle connection structures includes a second hollow portion disposed on the second bracket body and a slot portion protruding from at least a portion of an edge of the second hollow portion to the first bracket body.

4. The vehicular rear bumper installation support of claim 3, **characterized in that**, the buckle portion comprises a first blocking plate and a second blocking plate that are connected to each other at an angle, wherein the first blocking plate and the second blocking plate are respectively connected to opposite ends of the first hollow portion in the length direction of the vehicle body, wherein the first blocking plate is configured to restrict the second bracket in the length direction of the vehicle body and to support the second bracket in the height direction of the vehicle body, and the second blocking plate is configured to restrict the second bracket in the width direction of the vehicle body.

5. The vehicular rear bumper installation support of claim 4, **characterized in that**, an end of the first blocking plate connected with the second blocking plate is a curved structure, and the first blocking plate is connected to the second blocking plate through the curved structure.

6. The vehicular rear bumper installation support of claim 4, **characterized in that**, in the height direction of the vehicle body, the first blocking plate has a smaller width than the second blocking plate.

7. The vehicular rear bumper installation support of claim 6, **characterized in that**, the second blocking plate is provided with a plurality of reinforcing beams parallel to an edge of the second blocking plate on a side of the second blocking plate connected to the second bracket.

8. The vehicular rear bumper installation support of claim 3, **characterized in that**, the slot portion includes a plurality of slot plates protruding from at least a portion of the edge of the second hollow portion to the first bracket body and a slot provided on one of the plurality of slot plates; the slot portion has an opening toward the front of the vehicle body so as to slide into the buckle portion toward the front of the vehicle body.

9. The vehicular rear bumper installation support of claim 8, **characterized in that**, the one of the plurality of slot plates is provided with two opposite guide blocks protruding toward the slot, wherein the guide block is configured to guide the slot to slide into the buckle portion during the slot portion being buckled into the buckle portion, and the guide block is configured to block the slot from sliding out of the buckle portion after the slot portion is buckled into the buckle portion.

10. A vehicle, **characterized by** having a vehicular rear bumper installation support according to any one of claims 1-9.
